# EUROPÄISCHE PATENTSCHRIFT

(11) **EP 0 664 253 B1**
(45) Veröffentlichungstag und Bekanntmachung des Hinweises auf die Patenterteilung: **20.05.1998**
(21) Anmeldenummer: 94118646.2
(22) Anmeldetag: 26.11.1994
(51) Int. Cl.: B64C 1/14

(54) **Vorrichtung zur Verriegelung**
Device for locking
Dispositif pour verrouillage

(30) Priorität: 24.01.1994 DE 4401899
(43) Veröffentlichungstag der Anmeldung: 26.07.1995
(73) Patentinhaber: Daimler-Benz Aerospace Airbus Gesellschaft mit beschränkter Haftung, 21129 Hamburg (DE)
(72) Erfinder: Kallies, Günter, D-22523 Hamburg (DE); Lessat-Kaupat, Wolfgang, D-21147 Hamburg (DE); Lübke, Thomas, D-22869 Schenefeld (DE)
(74) Vertreter: Hansmann, Dierk, Dipl.-Ing.

(56) Entgegenhaltungen:
- EP-A- 0 133 082
- EP-A- 0 616 941
- DE-A- 2 021 511
- DE-A- 2 532 350
- US-A- 4 395 000

## Beschreibung

Die Erfindung betrifft eine Vorrichtung zur Verriegelung einer Flugzeugtür, die im Bereich einer Außenwandung des Flugzeuges angeordnet ist und die mindestens einen Verriegelungszapfen aufweist, der in einer Verriegelungspositionierung die Flugzeugtür relativ zur Außenwandung fixiert und bei der der Verriegelungszapfen mit einer ihn verschiebenden Positioniereinrichtung verbunden ist, sowie bei der die Positioniereinrichtung mit einem Steuerelement verbunden ist, das mindestens eine Membran und eine Steuerstange aufweist, die mit der Membran verkoppelt ist und bei der die Membran in eine Gehäusekammer angeordnet ist, die einerseits einen Innenanschluß zur Zuführung eines Kabineninnendruckes und andererseits einen Außenanschluß zur Zuführung eines Kabinenaußendruckes in den Bereich einander abgewandter Seite der Membran aufweist.

Derartige Verriegelungen werden verwendet, um eine unkontrollierte Öffnung der Flugzeugtüren zu verhindern. Nach einer Landung des Flugzeuges kann jedoch das Problem auftreten, daß im Innenraum des Flugzeuges ein höherer Luftdruck als in einer Umgebung des Flugzeuges herrscht. Da die Flugzeugtüren nach außen geöffnet werden, besteht somit die Gefahr, daß nach einer Entriegelung der Innendruck des Flugzeuges die Tür nach außen drückt. Aufgrund der relativ großen Angriffsfläche für den Innendruck entstehen erhebliche Verstellkräfte, die ein plötzliches Aufspringen der Flugzeugtüren zur Folge haben können. Da in der Regel die den Öffnungsvorgang durchführenden Personen eine derart schnelle Bewegung der Flugzeugtür nicht erwarten, besteht eine hohe Unfallgefahr. Gefährlich ist dabei besonders das Öffnen der Flugzeugtüren von außen, da hierbei die den Öffnungsvorgang durchführende Person meist unmittelbar vor der Flugzeugtür steht und bei einer plötzlichen Öffnungsbewegung von der Tür erfaßt werden kann.

Aus der EP-A-0 133 082 ist bereits eine Vorrichtung zur Verriegelung einer Flugzeugtür bekannt. Über ein Verriegelungsgestänge kann die Flugzeugtür relativ zu einer Außenwandung des Flugzeuges fixiert werden. Über ein membranartiges Bodenteil eines Manometers wird eine druckabhängige Bewegung des Bodenteiles über ein Hebelgestänge in eine Positionierbewegung für den Verriegelungszapfen umgesetzt. Ein Innenraum des Manometers ist über eine Zugangsöffnung mit einer Umgebung verbunden.

Aufgabe der vorliegenden Erfindung ist es, eine Vorrichtung der einleitend genannten Art derart zu konstruieren, daß bei einem Auftreten unzulässiger Druckdifferenzen zwischen einem Innenraum des Flugzeuges und einer Umgebung eine unkontrollierte Öffnungsbewegung der Flugzeugtür vermieden wird.

Diese Aufgabe wird erfindungsgemäß dadurch gelöst, daß in Richtung einer Längsachse der Steuerstange mindestens zwei Membrane hintereinander angeordnet sind und daß die jeweilige Gehäusekammer eine bei einer maximalen Stellkraft einer Membran an der Membran anliegende Innenfläche aufweist.

Es wird somit eine pneumatisch-mechanische Verriegelungseinrichtung bereitgestellt, die ohne elektrische oder elektronische Bauelemente auskommt. Hierdurch kann auch bei rauhen Einsatzbedingungen eine hohe Betriebssicherheit gewährleistet werden. Durch die Membran wird unmittelbar eine aus einem auftretenden Druckunterschied resultierende Stellkraft in die Verriegelungseinrichtung eingeleitet, so daß eine direkte Kopplung gewährleistet ist, die Funktionsbeeinträchtigungen durch lange Übertragungswege vermeidet. Durch die Kombination der Membran mit der Steuerstange wird ebenfalls eine sehr einfache Vorrichtung bereitgestellt, die verschleiß- und störungsunanfällig ist. Durch eine geeignete Dimensionierung der Funktionselemente kann gewährleistet werden, daß unterhalb einer vorgebbaren Druckdifferenz eine entriegelte Betriebsart und oberhalb der vorgebbaren Druckdifferenz eine verriegelte Betriebsart gewährleistet ist.

Zur Bereitstellung einer relativ zu einer Baugröße des Steuerelementes großen Stellkraft ist vorgesehen, daß in Richtung einer Längsachse der Steuerstange mindestens zwei Membrane hintereinander angeordnet sind.

Eine pneumatisch-mechanische Verriegelungseinrichtung kann dadurch bereitgestellt werden, daß die Steuerstange mit einem ein Teil der Positioniereinrichtung ausbildenden Verriegelungsgestänge verbunden ist.

Zur Minimierung der wirtschaftlichen Aufwendungen bei einem Einsatz der Verriegelungsvorrichtung wird vorgeschlagen, daß das Verriegelungsgestänge über ein Gelenk an das als Zusatzbauelement ausgebildete Steuerelement angeschlossen ist.

Eine besonders zweckmäßige Ausführungsform besteht darin, daß das Steuerelement als eine Differenzdruckdose ausgebildet ist.

Zur Adaption der Verriegelungsfunktion an typische Betriebsbedingungen wird vorgeschlagen, daß die Membran eine Dimensionierung aufweist, die bei einer Druckbeaufschlagung mit etwa 2,5 mbar eine zur Verstellung des Verriegelungszapfens erforderliche Stellkraft bereitstellt.

Ein definierter Beginn für einen Entriegelungsvorgang kann dadurch gewährleistet werden, daß im Bereich der Positioniereinrichtung eine einer Membrankraft entgegenwirkende Feder angeordnet ist.

Eine zweckmäßig Dimensionierung des Steuerelementes besteht darin, daß die Membran eine Fläche zur Bereitstellung einer maximalen Stellkraft von vier Newton aufweist.

Zur Vermeidung einer Beeinträchtigung der Funktionsfähigkeit auch bei hohen Differenzdrücken, beispielsweise in der Größenordnung von 1,2 bar, ist vorgesehen, daß die Gehäusekammer eine bei einer maximalen Stellkraft der Membran an der Membran anliegende Innenfläche aufweist.

In der Zeichnung sind Ausführungsbeispiele der Erfindung schematisch dargestellt. Es zeigen:
- Fig. 1: einen Horizontalschnitt durch eine mit der Verriegelungsvorrichtung versehene Flugzeugwandung,
- Fig. 2: einen Vertikalschnitt gemäß Schnittlinie II-II in Fig. 1,
- Fig. 3: eine teilweise Darstellung eines Vertikalschnittes gemäß Schnittlinie III-III in Fig. 1 **und**
- Fig. 4: einen Querschnitt gemäß Schnittlinie IV-IV in Fig. 2.

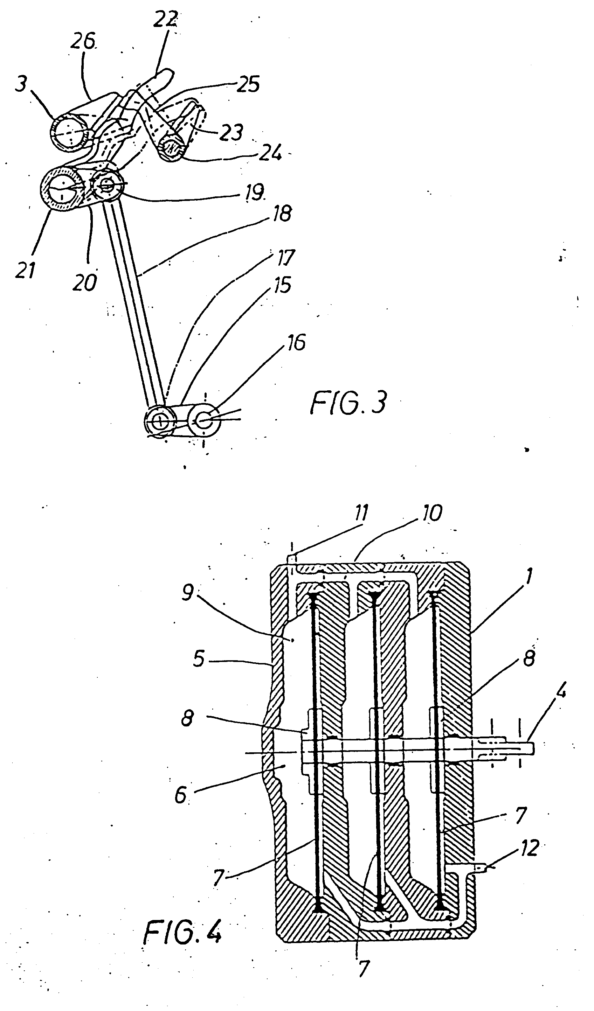

Die Vorrichtung zur Verriegelung einer Flugzeugtür besteht im wesentlichen aus einem Steuerelement (1), das als Teil einer Positioniereinrichtung (2) für einen Verriegelungszapfen (3) ausgebildet ist. Der detaillierte Aufbau des Steuerelementes (1) ist in Fig. 4 dargestellt. Eine Steuerstange (4) des Steuerelementes (1) ist in einem Gehäuse (5) geführt, das Gehäusekammern (6) umschließt. In jeder Gehäusekammer (6) ist eine Membran (7) angeordnet, die über eine Membranhalterung (8) mit der Steuerstange (4) verbunden ist. Die Membran (8) unterteilt die Gehäusekammer (6) in einen Außenluftbereich und einen Innenluftbereich (10).

Der Außenluftbereich (9) ist mit einem Außenanschluß (11) zur Zuführung eines Kabinenaußendruckes und der Innenluftbereich (10) mit einem Innenanschluß (12) zur Zuführung eines Kabineninnendruckes versehen. Insbesondere ist daran gedacht, die Gehäusekammer (6) derart zu dimensionieren, daß ein maximaler Hub der Membran (7) vorgegeben wird, bei dessen Erreichen die Membran (7) mindestens teilweise am Gehäuse (5) anliegt. Hierdurch können Beschädigungen der Membran bei einem Auftreten hoher Druckdifferenzen verhindert werden.

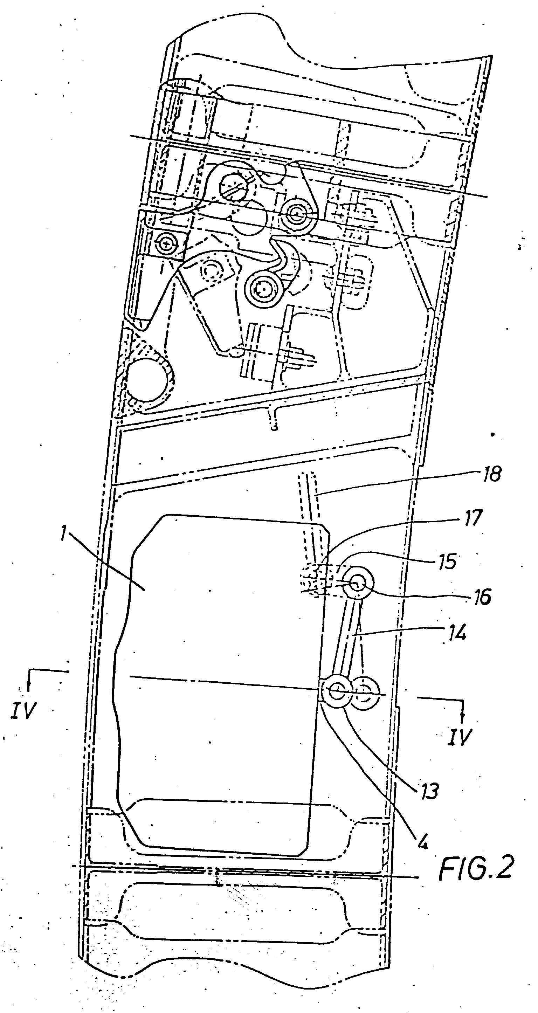

Die Steuerstange (4) greift in die Positioniereinrichtung (2) ein, die detailliert in Fig. 3 dargestellt ist. Die Steuerstange (4) ist über ein Gelenk (13) mit einem Umlenkhebel (14) verbunden, der im Bereich seiner dem Gelenk (13) abgewandten Ausdehnung starr mit einem Querhebel (15) gekoppelt ist. Gemäß der Darstellung in Fig. 2 ist der Übergangsbereich vom Umlenkhebel (14) in den Querhebel (5) über ein Schwenklager (16) relativ zur Struktur des Flugzeuges drehbar gelagert. Der Querhebel (15) ist über ein Gelenk (17) mit einer Hauptstange (18) verbunden, die in Abhängigkeit von der Drehbewegung des Querhebels (15) Grobbewegungen durchführt.

Die Hauptstange (18) ist über ein Gelenk (19) mit einem Drehhebel (20) verbunden, der starr mit einem Betätigungszapfen (21) verbunden ist. Der Betätigungszapfen (21) ist drehbar gelagert und wird bei einer Positionierung des Drehhebels (20) um seine Längsachse rotatorisch beaufschlagt. Der Betätigungszapfen (21) ist mit einer Auslösezunge (22) versehen, die mit einem Kipphebel (23) zusammenwirkt, der an einer Nebenwelle (24) befestigt ist und die Nebenwelle (24) in Abhängigkeit von seiner jeweiligen Positionierung verdreht. Die Nebenwelle (24) ist starr mit einem Stützhebel (25) verbunden, der mit einem Positionierhebel (26) des Verriegelungszapfens (3) zusammenwirkt. Durch die entsprechende Übersetzung der Hubbewegung der Hauptstange (18) wird der Verriegelungszapfen (3) entweder in die entriegelte oder in die verriegelte Positionierung überführt.

In Abhängigkeit von den für eine Positionierung des Verriegelungszapfens (3) erforderlichen Verstellkräften sieht die Erfindung vor, gemäß der Ausführungsform in Fig. 4 mindestens zwei Membrane (7) in Richtung einer Längsachse (27) der Steuerstange (4) hintereinander anzuordnen. Hierdurch wird bei einer kompakten Ausführungsform die Größe der wirksamen Membranfläche erhöht und damit werden ebenfalls die wirksamen Positionierkräfte vergrößert. Bei einer Verwendung mehrerer Membrane (7) sind eine der Anzahl der Membrane (7) entsprechende Anzahl von Gehäusekammern (6) hintereinander vorgesehen, die jeweils von den Membranen (7) in Außenluftbereiche (9) und in Innenluftbereiche (10) unterteilt sind. Jeder der Außenluftbereiche (9) ist mit dem Außenanschluß (11) und jeder der Innenluftbereiche (10) mit dem Innenanschluß (12) verbunden.

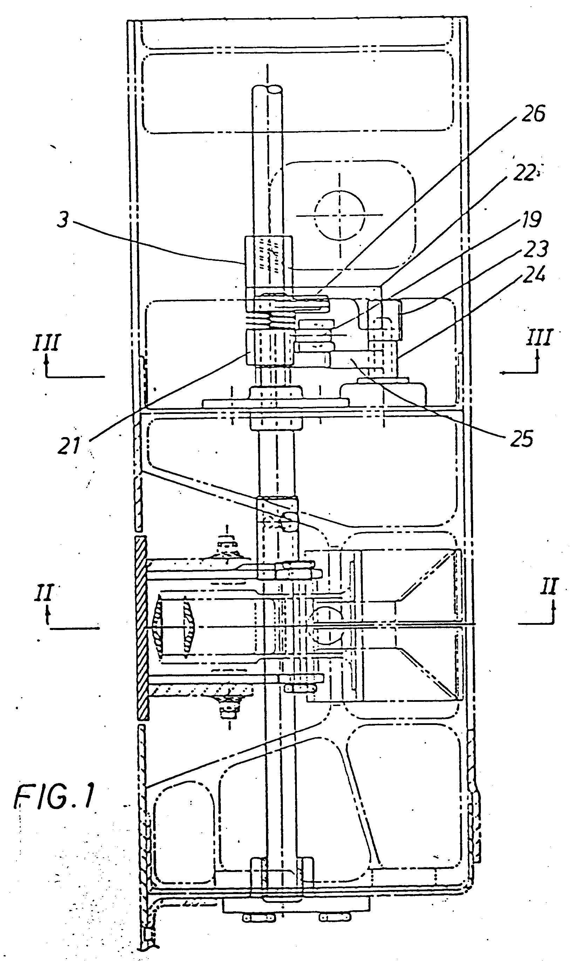

Die Figuren 1 und 2 geben Übersichtsdarstellungen wieder, in denen der Einbau der Positioniereinrichtung (2) und des Steuerelementes (1) im Bereich der Flugzeugwandung sowie der Flugzeugtür dargestellt sind.

## Patentansprüche

1. Vorrichtung zur Verriegelung einer Flugzeugtür, die im Bereich einer Außenwandung des Flugzeuges angeordnet ist und die mindestens einen Verriegelungszapfen (3) aufweist, der in einer Verriegelungspositionierung die Flugzeugtür relativ zur Außenwandung fixiert und bei der der Verriegelungszapfen (3) mit einer ihn verschiebenden Positioniereinrichtung (2) verbunden ist, sowie bei der die Positioniereinrichtung (2) mit einem Steuerelement (1) verbunden ist, das mindestens eine Membran (7) und einer Steuerstange (4) aufweist, die mit der Membran (7) verkoppelt ist und bei der die Membran (7) in einer Gehäusekammer (6) angeordnet ist, die einerseits einen Innenanschluß (12) zur Zuführung eines Kabineninnendruckes und andererseits einen Außenanschluß (11) zur Zuführung eines Kabinenaußendruckes in den Bereich einander abgewandter Seite der Membran (7) aufweist, dadurch gekennzeichnet, daß in Richtung einer Längsachse (27) der Steuerstange (4) mindestens zwei Membrane (7) hintereinander anGeordnet sind und daß die jeweilige Gehäusekammer (6) eine bei einer maximalen Stellkraft einer Membran (7) an der Membran (7) anliegende Innenfläche aufweist.

2. Vorrichtung nach Anspruch 1, daß die Steuerstange (4) mit einem ein Teil der Positioniereinrichtung (2) ausbildenden Verriegelungsgestänge verbunden ist.

3. Vorrichtung nach Anspruch 1 oder 2, dadurch gekennzeichnet, daß das Verriegelungsgestänge über ein Gelenk (13) an das als Zusatzbauelement ausgebildete Steuerelement (1) angeschlossen ist.

4. Vorrichtung nach einem der Ansprüche 1 bis 3, dadurch gekennzeichnet, daß das Steuerelement (1) als eine Differenzdruckdose ausgebildet ist.

5. Vorrichtung nach einem der Ansprüche 1 bis 4, dadurch gekennzeichnet, daß die Membran (7) eine Dimensionierung aufweist, die bei einer Druckbeaufschlagung mit etwa 2,5 mbar eine zur Verstellung des Verriegelungszapfens (3) erforderliche Stellkraft bereitstellt.

6. Vorrichtung nach einem der Ansprüche 1 bis 5, dadurch gekennzeichnet, daß im Bereich der Positioniereinrichtung (2) eine einer Membrankraft entgegenwirkende Feder angeordnet ist.

7. Vorrichtung nach einem der Ansprüche 1 bis 6, dadurch gekennzeichnet, daß von der Membran (7) eine Fläche zur Bereitstellung einer maximalen Stellkraft von vier Newton aufweist.

## Claims

1. Device for locking an aircraft door, which device is disposed in the region of an outer wall of the aircraft and has at least one locking pin (3) which, in a locking positioning, immobilises the aircraft door in relation to the outer wall, wherein the locking pin (3) is connected to a positioning arrangement (2) which slides it and also wherein the positioning arrangement (2) is connected to a control element (1) which has at least one diaphragm (7) and a control rod (4) which is coupled to the diaphragm (7) and wherein the diaphragm (7) is disposed in a housing chamber (6) which has, on the one hand, an internal connection (12) for feeding a pressure internal to the cabin, and on the other hand, an external connection (11) for feeding a pressure external to the cabin, into the region of mutually averted sides of the diaphragm (7), characterised in that at least two diaphragms (7) are disposed one behind the other in the direction of a longitudinal axis (27) of the control rod (4), and that the particular housing chamber (6) has an internal face which rests against a diaphragm (7) when a maximum displacing force of the diaphragm (7) occurs.

2. Device according to claim 1, characterised in that the control rod (4) is connected to a locking linkage forming part of the positioning arrangement (2).

3. Device according to claim 1 or 2, characterised in that the locking linkage is linked, via a joint (13), to the control element (1) which is constructed as an additional structural element.

4. Device according to one of claims 1 to 3, characterised in that the control element (1) is constructed as a differential pressure cell.

5. Device according to one of claims 1 to 4, characterised in that the diaphragm (7) has dimensioning which, when acted upon by pressure at about 2.5 mbar, makes available the displacing force which is necessary for shifting the locking pin (3).

6. Device according to one of claims 1 to 5, characterised in that a spring which acts against the force of the diaphragm is disposed in the region of the positioning arrangement (2).

7. Device according to one of claims 1 to 6, characterised in that the diaphragm (7) has an area for making available a maximum displacing force of four newtons.

## Revendications

1. Dispositif de verrouillage d'une porte d'avion, qui est disposé dans une paroi externe de l'avion et qui présente au moins un verrou (3), lequel verrouille la porte d'avion par rapport à la paroi externe et dans lequel le verrou (3) est connecté à une installation de positionnement (2) le coulissant, et dans lequel l'installation de positionnement (2) est reliée à un élément de commande (1) étant au moins pourvu d'une membrane (7) et d'une tige de commande (4) couplée à ladite membrane et où la membrane (7) est disposée dans un boîtier (6) qui présente d'une part une connexion interne (12) destinée à amener la pression interne de la cabine et d'autre part une connexion externe (11) destinée à amener la pression externe de la cabine sur le côté opposé de la membrane (7), **caractérisé en ce que** dans la direction d'un axe longitudinal (27) de la tige de commande (4) se succèdent au moins deux membranes (7) et en ce que ledit boîtier (6) présente une surface interne reposant sur la membrane (7) en cas de puissance maximale d'une membrane (7).

2. Dispositif suivant la revendication 1, caractérisé en ce que la tige de commande (4) est connectée à un système de tiges de verrouillage formant une partie de l'installation de positionnement (2).

3. Dispositif suivant la revendication 1 ou 2, caractérisé en ce que le système de tiges de verrouillage est connecté par l'intermédiaire d'une articulation (13) à l'élément de commande (1) conçu comme un élément de construction auxiliaire.

4. Dispositif suivant l'une ou l'autre des revendications 1 à 3, caractérisé en ce que l'élément de commande (1) est conçu comme une boîte à pression différentielle.

5. Dispositif suivant l'une ou l'autre des revendications 1 à 4, caractérisé en ce que la membrane (7) a une dimension qui, en cas de mise sous pression de environ 2,5 mbar, donne la puissance nécessaire au déplacement du verrou (3).

6. Dispositif suivant l'une ou l'autre des revendications 1 à 5, caractérisé en ce que dans la zone de l'installation de positionnement (2) est disposé un ressort s'opposant à la force de la membrane.

7. Dispositif suivant l'une ou l'autre des revendications 1 à 6, caractérisé en ce que la membrane (7) présente une surface destinée à produire une puissance maximale de quatre Newton.
